# EUROPEAN PATENT APPLICATION

(11) **EP 4 800 039 A1**
(43) Date of publication of application: **02.09.2026**
(21) Application number: 26170285.6
(22) Date of filing: 01.04.2026
(51) Int. Cl.: C08B 1/02, C08K 5/521

(54) **CELLULOSE-BASED MATERIAL**

(30) Priority: 04.02.2025 JP 2025016605
(71) Applicant: Seiko Epson Corporation, Tokyo 160-8801 (JP)
(72) Inventor: IKEDA, Daisuke, Suwa-shi, 392-8502 (JP); TANAKA, Hideki, Suwa-shi, 392-8502 (JP); NAKASHIMA, Yoshiki, Suwa-shi, 392-8502 (JP); YOSHIDA, Makoto, Suwa-shi, 392-8502 (JP); MIKOSHIBA, Toshiaki, Suwa-shi, 392-8502 (JP)
(74) Representative: Lewis Silkin LLP

(57) **Abstract**

A cellulose-based material of the present disclosure includes cellulose having a crystallinity of 50% or less, and a coating material that coats hydroxy groups on a surface of the cellulose at a coverage of 0.1% or more and 20% or less, in which the coating material is at least one selected from the group consisting of an aliphatic compound, an aromatic compound, and a higher alcohol.

## Description

The present application is based on, and claims priority from JP Application Serial Number 2025-016605, filed February 4, 2025, the disclosure of which is hereby incorporated by reference herein in its entirety.

### BACKGROUND

### 1. Technical Field

The present disclosure relates to a cellulose-based material.

### 2. Related Art

Cellulose has been used as, for example, a raw material for cellulose ether, and an industrial raw material for pharmaceuticals, cosmetics, foods, biomass materials, and the like.

In particular, in recent years, environmentally friendly materials have been demanded, and cellulose, which is a naturally derived material, has been attracting attention.

However, when cellulose is used as a raw material as described above as it is, reactivity is poor, and it is difficult to suitably cause a desired reaction to proceed.

Further, it has been proposed to subject cellulose to a surface treatment for the purpose of, for example, preventing aggregation of cellulose in a liquid (see, for example, JP-A-2019-178266).

However, when the surface treatment as described above is performed, it is difficult to sufficiently increase reactivity of cellulose. That is, in the related art, it is difficult to achieve both reactivity of cellulose and suppression of aggregation.

### SUMMARY

A cellulose-based material according to an application example of the present disclosure includes cellulose having a crystallinity of 50% or less and a coating material that coats hydroxy groups on a surface of the cellulose, in which the coating material is at least one selected from the group consisting of an aliphatic compound, an aromatic compounds, and a higher alcohol, and a coverage of the hydroxy groups on the surface of the cellulose with the coating material is 0.1% or more and 20% or less.

### BRIEF DESCRIPTION OF THE DRAWINGS

FIG. 1 is a view for explaining a method for determining the coverage of hydroxy groups on a surface of cellulose with a coating material.
FIG. 2 is a table collectively showing compositions and evaluation results of cellulose-based materials of Examples 1 to 9 and Comparative Examples 1 to 5.

### DESCRIPTION OF EMBODIMENTS

Hereinafter, preferred embodiments of the present disclosure will be described in detail.

### [1] Cellulose-based material

First, a cellulose-based material of the present disclosure will be described.

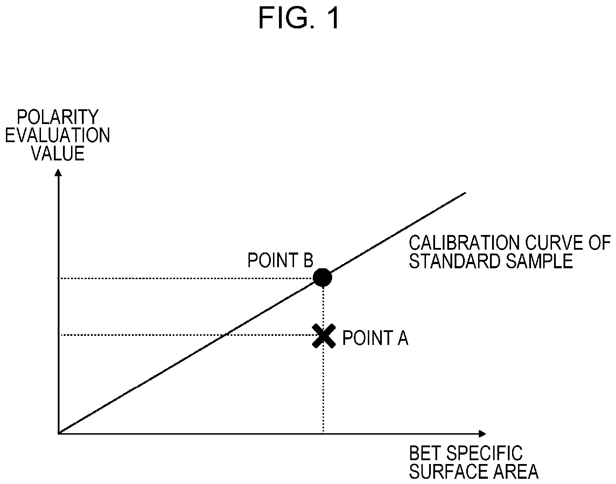

FIG. 1 is a view for explaining a method for determining the coverage of hydroxy groups on a surface of cellulose with a coating material.

The cellulose-based material of the present disclosure includes cellulose having a crystallinity of 50% or less and a coating material that coats hydroxy groups on a surface of the cellulose, in which the coating material is at least one selected from the group consisting of an aliphatic compound, an aromatic compounds, and a higher alcohol, and a coverage of the hydroxy groups on the surface of the cellulose with the coating material is 0.1% or more and 20% or less.

With such a configuration, it is possible to provide a cellulose-based material capable of achieving both reactivity of cellulose and suppression of aggregation. More specifically, the reactivity can be improved by sufficiently decreasing the crystallinity of the cellulose, and aggregation of the cellulose can be sufficiently suppressed while maintaining reactivity of the cellulose by coating the hydroxy groups on the surface of the cellulose with a predetermined coating material at a predetermined ratio.

On the other hand, when the above conditions are not satisfied, a satisfactory result may not be obtained.

For example, when the degree of crystallinity of cellulose is too large, the reactivity cannot be sufficiently increased even if the cellulose is coated with the specific coating material as described above.

In addition, when the hydroxy groups on the surface of the cellulose are not coated with the specific coating material as described above, even when the condition of the crystallinity as described above is satisfied, the ratio of hydroxy groups exposed on the surface among hydroxy groups included in the cellulose increases, hydrogen bonding between hydroxy groups is induced, and as a result, aggregation of the cellulose is likely to occur. Therefore, even in a liquid, dispersibility of the cellulose becomes remarkably low, and reactivity of the cellulose becomes low.

In addition, even when the condition of the crystallinity as described above is satisfied and the hydroxy groups on the surface of the cellulose are coated with the specific coating material as described above, if the coverage is too low, the effect of coating with the specific coating material as described above is not sufficiently obtained, the ratio of the hydroxy groups exposed on the surface among the hydroxy groups included in the cellulose increases, hydrogen bonding between hydroxy groups is induced, and as a result, aggregation of the cellulose is likely to occur. As a result, even in a liquid, the dispersibility of cellulose becomes remarkably low, and reactivity of the cellulose becomes low.

In addition, even when the condition of the crystallinity as described above is satisfied and the hydroxy groups on the surface of the cellulose are coated with the specific coating material as described above, if the coverage is too high, the number of hydroxy groups which are exposed on the surface and can react decreases, and the effect of reducing the crystallinity is lost.

The crystallinity of the cellulose can be determined by X-ray crystal structure analysis (XRD). The X-ray crystal structure analysis can be performed using, for example, a single crystal X-ray structure analyzer such as X'Pert PRO MPD manufactured by Malvern Panalytical Ltd.

In the present disclosure, the coverage of the hydroxy groups on the surface of the cellulose can be determined by pulse NMR measurement as a polarity evaluation method and BET method specific surface area measurement as a gas adsorption method. More specifically, it is as shown in FIG. 1.

First, a standard sample not coated with the coating material is subjected to a refining treatment under different conditions to obtain a plurality of samples having different BET specific surface areas. Polarity evaluation is performed on the plurality of samples by a pulse NMR method, a graph in which a vertical axis represents polarity evaluation values by the pulse NMR method and a horizontal axis represents BET specific surface areas is created, and a calibration curve is drawn.

Next, the BET specific surface area and the polarity evaluation value by the pulse NMR method are obtained for a measurement target sample, that is, a sample in which the hydroxy groups on the surface of the cellulose are coated with the coating material, and a point A is plotted on the graph. Then, the polarity evaluation value of the sample is compared with the polarity evaluation value at a point B on the calibration curve having the same BET specific surface area as that of the sample, and the rate of decrease from the polarity evaluation value at the point B is determined. More specifically, for example, in a case where the ratio of the polarity evaluation value at the point A to the polarity evaluation value at the point B is 0.90, the polarity evaluation value is decreased by 10%, and thus it is determined that the coverage of the hydroxy groups on the surface of the cellulose with the coating material is 10%. In addition, for example, in a case where the ratio of the polarity evaluation value at the point A to the polarity evaluation value at the point B is 0.10, the polarity evaluation value is decreased by 90%, and thus it is determined that the coverage of the hydroxy groups on the surface of the cellulose with the coating material is 90%.

The crystallinity and the coverage of the hydroxy groups on the surface of the cellulose with the coating material, which will be described later in Examples, are also values obtained as described above.

### [1-1] Cellulose

The cellulose-based material of the present disclosure contains cellulose.

Cellulose is the main component of the cellulose-based material of the present disclosure.

The content of the cellulose in the cellulose-based material is preferably 80% by mass or more, more preferably 90% by mass or more, and still more preferably 95% by mass or more.

The cellulose contained in the cellulose-based material may be natural cellulose or regenerated cellulose. In addition, the cellulose-based material may contain both natural cellulose and regenerated cellulose.

The cellulose contained in the cellulose-based material may have a type I crystal structure or a type II crystal structure. In addition, the cellulose-based material may contain both a type I crystal structure and a type II crystal structure.

The crystallinity of the cellulose contained in the cellulose-based material may be 50% or less, preferably 25% or less, and more preferably 20% or less, in view of reactivity.

Consequently, the effect of the present disclosure is more remarkably exhibited.

### [1-2] Specific coating material

The cellulose-based material contains, as the coating material that coats the hydroxy groups on the surface of the cellulose described above, at least one selected from the group consisting of an aliphatic compound, an aromatic compound, and a higher alcohol.

In the following description, such a coating material is also referred to as a "specific coating material."

The aliphatic compound as the specific coating material may be a compound having an aliphatic hydrocarbon group and having no aromatic functional group in the molecule thereof.

Examples of the aliphatic compound include an aliphatic hydrocarbon and various compounds having an aliphatic hydrocarbon group, more specifically an alcohol compound, a carboxylic acid compound, an amine compound, an ester compound, an ether compound, an amide compound, and a phosphate ester compound. Provided that these compounds include salts.

The number of carbon atoms of the aliphatic hydrocarbon and the aliphatic hydrocarbon group is not particularly limited, but is preferably 4 or more and 30 or less, more preferably 8 or more and 26 or less, and still more preferably 12 or more and 22 or less.

Consequently, the hydroxy groups on the surface of the cellulose can be more suitably coated with a smaller amount of the specific coating material. As a result, in a case where the cellulose-based material is used as a raw material of a chemical reaction in which cellulose is used as a reaction substrate, the content of the specific coating material which is an impurity can be further reduced, and thus, an intended chemical reaction can be more suitably progressed. In particular, when the intended chemical reaction is an esterification reaction, the specific coating material is effectively prevented from adversely affecting the esterification reaction. In addition, a post-treatment such as purification after the intended chemical reaction can also be more preferably performed.

The aromatic compound as the specific coating material may be a compound having an aromatic functional group in the molecule thereof, and may be a compound further having an aliphatic hydrocarbon group, and may be a compound having no aliphatic hydrocarbon group.

Examples of the aromatic compound include an aromatic hydrocarbon, an aromatic heterocyclic compound, and various compounds having an aromatic hydrocarbon group or an aromatic heterocyclic ring, more specifically an alcohol compound, a carboxylic acid compound, an amine compound, an ester compound, an ether compound, an amide compound, and a phosphate ester compound. Provided that these compounds include salts.

The number of carbon atoms of the aromatic hydrocarbon and the aromatic hydrocarbon group is not particularly limited, but is preferably 6 or more and 26 or less, more preferably 10 or more and 22 or less, and still more preferably 13 or more and 18 or less.

Consequently, the hydroxy groups on the surface of the cellulose can be more suitably coated with a smaller amount of the specific coating material. As a result, in a case where the cellulose-based material is used as a raw material of a chemical reaction in which cellulose is used as a reaction substrate, the content of the specific coating material which is an impurity can be further reduced, and thus, an intended chemical reaction can be more suitably progressed. In particular, when the intended chemical reaction is an esterification reaction, the specific coating material is effectively prevented from adversely affecting the esterification reaction. In addition, a post-treatment such as purification after the intended chemical reaction can also be more preferably performed.

The higher alcohol as the specific coating material may be an alcohol compound in which the number of carbon atoms contained in the molecule thereof is 12 or more, and may be, for example, an aliphatic compound or an aromatic compound.

In particular, the higher alcohol preferably has an aliphatic hydrocarbon group, more preferably has an aliphatic hydrocarbon group having 12 or more and 20 or less carbon atoms, and still more preferably has an aliphatic hydrocarbon group having 12 or more and 16 or less carbon atoms.

Consequently, the hydroxy groups on the surface of the cellulose can be more suitably coated with a smaller amount of the specific coating material. As a result, in a case where the cellulose-based material is used as a raw material of a chemical reaction in which cellulose is used as a reaction substrate, the content of the specific coating material which is an impurity can be further reduced, and thus, an intended chemical reaction can be more suitably progressed. In particular, when the intended chemical reaction is an esterification reaction, the specific coating material is effectively prevented from adversely affecting the esterification reaction. In addition, a post-treatment such as purification after the intended chemical reaction can also be more preferably performed.

The higher alcohol preferably has no functional group other than a hydrocarbon group and a hydroxy group.

Consequently, in a case where the cellulose-based material is used as a raw material of a chemical reaction in which cellulose is used as a reaction substrate, an intended chemical reaction can be more suitably progressed. In particular, when the intended chemical reaction is an esterification reaction, the specific coating material is effectively prevented from adversely affecting the esterification reaction. In addition, a post-treatment such as purification after the intended chemical reaction can also be further preferably performed.

Among the above, the specific coating material preferably contains an aliphatic compound, and more preferably contains a phosphate ester compound.

Consequently, the hydroxy groups on the surface of the cellulose can be more suitably coated with a smaller amount of the specific coating material. As a result, in a case where the cellulose-based material is used as a raw material of a chemical reaction in which cellulose is used as a reaction substrate, the content of the specific coating material which is an impurity can be further reduced, and thus, an intended chemical reaction can be further suitably progressed. In particular, when the intended chemical reaction is an esterification reaction, the specific coating material is effectively prevented from adversely affecting the esterification reaction. In addition, a post-treatment such as purification after the intended chemical reaction can also be further preferably performed.

In the case of containing the phosphate ester compound as the aliphatic compound, the coverage of the hydroxy groups on the surface of the cellulose with the phosphate ester compound as the aliphatic compound is preferably 0.1% or more and 20% or less.

The phosphate ester compound is preferably, for example, a compound represented by the following formula (1). 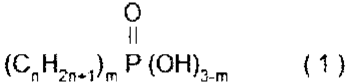 In the formula (1), m is 1 or 2, and n is an integer of 12 or more and 20 or less.

Consequently, the above-described effect is more remarkably exhibited.

When the cellulose-based material contains the phosphate ester compound represented by the formula (1), the cellulose-based material preferably contains, as the phosphate ester compound, a compound in which n in the formula (1) is 14 or more and 20 or less, and more preferably contains an oleyl acid phosphate, that is, a compound in which n in the formula (1) is 18 or less.

Consequently, the above-described effect is more remarkably exhibited.

When the oleyl acid phosphate is contained as the phosphate ester compound, the coverage of the hydroxy groups on the surface of the cellulose with the oleyl acid phosphate as the phosphate ester compound is preferably 0.1% or more and 20% or less.

The cellulose-based material may contain a material other than the phosphate ester compound in addition to the phosphate ester compound as the specific coating material, but the proportion of the phosphate ester compound in the entire specific coating material contained in the cellulose-based material is preferably 50% by mass or more, more preferably 70% by mass or more, and still more preferably 90% by mass or more.

Consequently, the above-described effect is further remarkably exhibited.

The coverage of the hydroxy groups on the surface of the cellulose with the specific coating material may be 0.1% or more and 20% or less, and is preferably 0.1% or more and 17% or less.

Consequently, the effect of the present disclosure is more remarkably exhibited.

The content of the specific coating material in the cellulose-based material is preferably 0.0001% by mass or more and 10% by mass or less, more preferably 0.0005% by mass or more and 2.0% by mass or less, and even more preferably 0.001% by mass or more and 1.0% by mass or less.

Consequently, the coverage of the hydroxy groups on the surface of the cellulose with the specific coating material is easily adjusted to the above-described ranges. In addition, since it is possible to reduce the amount of the specific coating material which is included in the cellulose-based material and does not contribute to the coating of the hydroxy groups on the surface of the cellulose, it is possible to further reduce the content of the specific coating material which is an impurity in a case where the cellulose-based material is used as a raw material of a chemical reaction in which cellulose is a reaction substrate. Therefore, an intended chemical reaction can be further suitably progressed. In particular, when the intended chemical reaction is an esterification reaction, the specific coating material is effectively prevented from adversely affecting the esterification reaction. In addition, a post-treatment such as purification after the intended chemical reaction can also be more preferably performed.

### [1-3] Other components

The cellulose-based material of the present disclosure may contain a component other than the cellulose and the specific coating material described above. Hereinafter, such components are also referred to as "other components" in this section.

Examples of the other components include hemicellulose, lignin, various cellulose derivatives, a colorant, a filler, a sizing agent, a paper strength enhancer, a flame retardant, an antioxidant, an insect repellent, an antifungal agent, an antimicrobial agent, an antistatic agent, a flame retardant aid, an ultraviolet absorbent, an aggregation inhibitor, a release agent, a processing aid, an antidripping agent, a resin material, a plasticizer, and a coating material other than the above-described specific coating material.

However, the content of the other components in the cellulose-based material of the present disclosure is preferably 10% by mass or less, more preferably 5% by mass or less, and still more preferably 3% by mass or less.

### [1-4] Use of cellulose-based material

The cellulose-based material of the present disclosure may be used for any application, but is preferably used, for example, for an application in which the cellulose contained as the main component is used as a raw material for various chemical reactions, such as a raw material for cellulose ether, or an industrial raw material for a pharmaceutical, a cosmetic, food, a biomass material, or the like.

As described above, when cellulose is used as a raw material for various chemical reactions, it is required to achieve both reactivity of cellulose and inhibition of aggregation at higher levels, and the present disclosure can meet such a requirement. In other words, when the cellulose-based material is used as a raw material for various chemical reactions, the effect of the present disclosure is more remarkably exhibited.

The cellulose-based material of the present disclosure may be used for an application other than those described above, for example, as a material for a molded article.

### [2] Method for producing cellulose-based material

Next, the method for producing a cellulose-based material of the present disclosure will be described.

The cellulose-based material of the present disclosure can be produced, for example, by mixing components such as a material containing cellulose and the specific coating material. In this case, the respective components may be mixed at the same timing or at different timings.

As the material containing cellulose, for example, pulp, waste paper, waste clothes, or the like can be used.

At the time of mixing the respective components, it is preferable to perform fine pulverization of the material containing cellulose together.

Such a treatment can be suitably performed by using, for example, a dry bead mill.

In the above treatment, a dispersion medium for dispersing the material containing cellulose may be used.

Such a dispersion medium may be removed by centrifugation, filtration, vaporization, or the like after the above-described treatment.

Although the preferred embodiments of the present disclosure have been described above, the present disclosure should not be limited to the embodiments.

For example, the cellulose-based material of the present disclosure is not limited to those produced by the above-described method.

### EXAMPLES

Next, specific examples of the present disclosure will be described.

### [3] Preparation of cellulose-based material

### Example 1

Commercially available pulp (manufactured by CMPC S.A., Guaiba BEKP) as a raw material containing cellulose was prepared, oleyl acid phosphate as a specific coating material was added thereto, the mixture was subjected to a treatment with a dry bead mill, followed by mixing, and fine pulverization of the pulp was performed.

The cellulose-based material obtained as described above contained cellulose having a crystallinity of 20% and oleyl acid phosphate as the specific coating material for coating hydroxy groups on a surface of the cellulose at a coverage of 0.10%. In the obtained cellulose-based material, the content of cellulose was 99% by mass, and the content of the specific coating material was 1% by mass.

### Examples 2 to 9

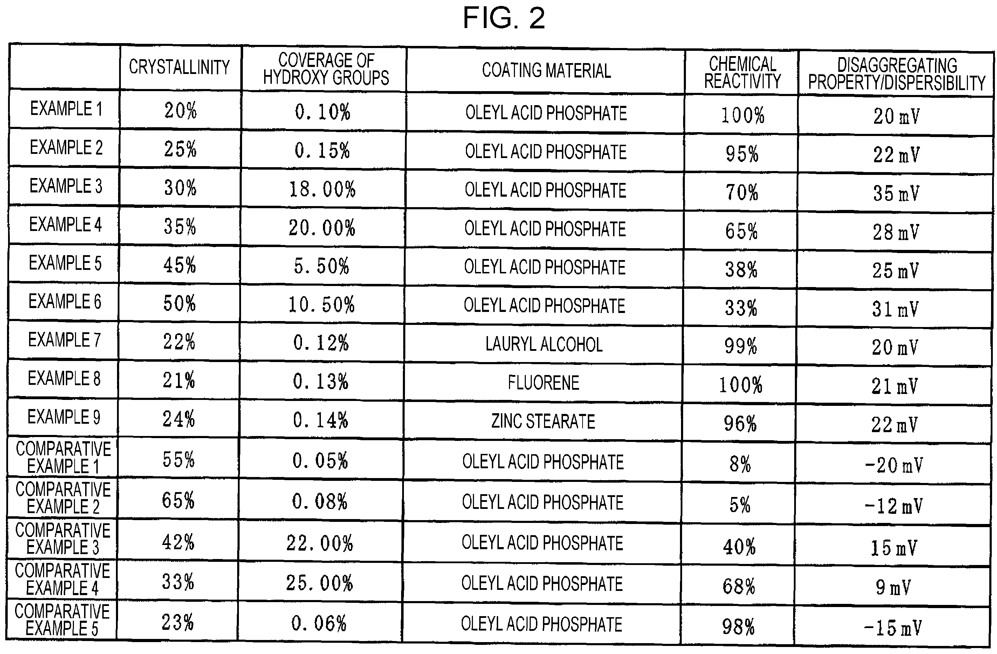

A cellulose-based material was produced in the same manner as in Example 1, except that the compositions shown in FIG. 2 were obtained by adjusting the kind and amount of the raw material containing cellulose used, the kind and amount of the specific coating material used, and the treatment conditions with the dry bead mill.

In each of the cellulose-based materials of Examples, the content of cellulose was 95% by mass or more, and the content of the specific coating material was 0.001% by mass or more and 1.0% by mass or less.

### Comparative Examples 1 to 5

A cellulose-based material was produced in the same manner as in Example 1, except that the compositions shown in FIG. 2 were obtained by adjusting the kind and amount of the raw material containing cellulose used, the kind and amount of the specific coating material used, and the treatment conditions with the dry bead mill.

### [4] Evaluation

The cellulose-based materials of Examples and Comparative Examples were evaluated as follows.

### [4-1] Chemical reactivity

The cellulose-based materials of Examples and Comparative Examples were subjected to esterification reaction as described below, and chemical reactivity was evaluated.

First, the cellulose-based material (1.9 g), N-methyl-2-pyrrolidinone (25 mL), and pyridine (3 mL) were mixed and stirred at 90°C to allow an esterifying reaction to proceed.

A part of the reaction liquid was taken out at each time point when a predetermined time elapsed from the start of the reaction, and the substitution degree (DS value) of hydroxy groups was determined. The DS value is a ratio at which three hydroxy groups present in one glucose unit constituting cellulose are converted into an ester through reaction, and is an average value of the entire cellulose molecule. Theoretically, when all the hydroxy groups of cellulose remain without reacting, the DS value is 0, which is the minimum value, and when all the hydroxy groups of cellulose react to form other groups, the DS value is 3, which is the maximum value. It can be said that the higher the DS value, the more advanced the esterification reaction.

For each of the above Examples and Comparative Examples, the reaction was carried out for 4 hours from the start of the reaction, and the transition of the DS value was confirmed.

The highest DS value among the DS values obtained at the respective time points in Examples and Comparative Examples was defined as a reaction rate of 100%, and for the other Examples and Comparative Examples, the respective reaction rates were obtained from the ratios to the Example having a reaction rate of 100%.

### [4-2] Disaggregating property/dispersibility

The cellulose-based materials of Examples and Comparative Examples were evaluated for disaggregating property and dispersibility as follows.

That is, each of the cellulose-based materials and water were mixed to prepare a cellulose dispersion liquid having a cellulose concentration of 0.5% by mass, and the zeta potential was measured at 20°C using a zeta potential meter (ELSZ-1000) manufactured by Otsuka Electronics Co., Ltd. It can be said that the larger the value of the zeta potential, the more excellent the disaggregating property and dispersibility.

These results are collectively shown in FIG. 2 together with the compositions of the cellulose-based materials of Examples and Comparative Examples.

As is clear from FIG. 2, excellent results were obtained in Examples. In contrast, Comparative Examples did not show satisfactory results.

Each of the cellulose-based materials of Examples and Comparative Examples was mixed with pure water so as to have a content of 0.5% by mass, and the mixture was stirred for 10 minutes. Then, each dispersion was allowed to stand, and the time until precipitation occurred was measured. As a result, in the cellulose-based material having a zeta potential of less than 20 mV, precipitation occurred in less than 15 seconds after the standing, whereas in the cellulose-based material having a zeta potential of 20 mV or more, the dispersion liquid remained clearly turbid even after 15 seconds or more from the standing, and the dispersion state was maintained.

## Claims

1. A cellulose-based material comprising:
cellulose having a crystallinity of 50% or less; and
a coating material that coats hydroxy groups on a surface of the cellulose, wherein
the coating material is at least one selected from the group consisting of an aliphatic compound, an aromatic compound, and a higher alcohol, and
a coverage of the hydroxy groups on the surface of the cellulose with the coating material is 0.1% or more and 20% or less.

2. The cellulose-based material according to claim 1, wherein
the cellulose has a crystallinity of 25% or less.

3. The cellulose-based material according to claim 1, wherein
a coverage of the hydroxy groups on the surface of the cellulose with a phosphate ester compound as the aliphatic compound is 0.1% or more and 20% or less.

4. The cellulose-based material according to claim 3, wherein
a coverage of the hydroxy groups on the surface of the cellulose with oleyl acid phosphate as the phosphate ester compound is 0.1% or more and 20% or less.
